# EUROPEAN PATENT APPLICATION

(11) **EP 4 654 276 A1**
(43) Date of publication of application: **26.11.2025**
(21) Application number: 25743686.5
(22) Date of filing: 25.02.2025
(51) Int. Cl.: H01M 4/13, H01M 10/0525, H01M 4/36, H01M 4/38, H01M 4/62

(54) **FAST-CHARGING NEGATIVE ELECTRODE SHEET, LITHIUM-ION BATTERY AND ELECTRIC DEVICE**

(30) Priority: 31.12.2024 CN 202411999772
(71) Applicant: Eve Energy Co. Ltd., Huizhou, Guangdong 516000 (CN)
(72) Inventor: DENG, Songhui, Huizhou Guangdong 516006 (CN); LIU, Rongjiang, Huizhou Guangdong 516006 (CN); HUANG, Binbin, Huizhou Guangdong 516006 (CN); CHEN, Zhiwei, Huizhou Guangdong 516006 (CN); LI, Yuanzhi, Huizhou Guangdong 516006 (CN)
(74) Representative: Grünecker Patent- und Rechtsanwälte PartG mbB
(86) International application number: PCT/CN2025/078968
(87) International publication number: WO 2025/213970

(57) **Abstract**

Provided are a fast-charging anode sheet, a lithium-ion battery, and an electric device. The anode active material in the anode material layer of the fast-charging anode sheet includes a silicon-based material and a carbon-based material; based on the mass of the anode active material as 100%, a mass fraction of the silicon-based material in the anode active material is 70wt%-99.5wt%, and a mass fraction of the carbon-based material is 0.5wt%-30wt%. The anode active material in the anode material layer of the fast-charging anode sheet includes a silicon-based material and a carbon-based material, and the silicon-based material is the main component of the anode active material, which ensures a high gravimetric capacity and fast-charging performance of the anode material layer, and brings about a low areal density of the anode material layer, thus the lithium-ion battery prepared by the coordination of the fast-charging anode sheet and the cathode sheet having a high areal density, has high energy density and can achieve high-rate charging as well; the fast-charging anode sheet has the advantages of low production cost and simple production process.

## Description

This application claims priority to Chinese Patent Application No. 2024119997720 filed on December 31, 2024, the disclosure of which is incorporated herein by reference in its entirety.

### TECHNICAL FIELD

The present application relates to the technical field of batteries, specifically relates to a fast-charging anode sheet, and especially relates to a fast-charging anode sheet, a lithium-ion battery, and an electric device.

### BACKGROUND

Lithium-ion batteries are developing rapidly in various industries, and in order to meet the demand for battery life, the requirements for energy density and fast-charging performance are constantly increasing, wherein the improvement of fast-charging capability is closely related to the electrode design of the anode. The design method of the anode sheet of conventional fast-charging batteries mainly improves the kinetic performance of the anode sheet by selecting the fast-charging graphite material, reducing the areal density of the anode sheet, and increasing the content of conductive agent. However, the higher the rate capability of graphite, the lower its gravimetric capacity; thereby the achieving of higher fast-charging capability needs to sacrifice the energy density of the battery.

In order to solve the shortcomings brought about by the conventional electrode sheet design method of fast-charging batteries, double-layer or multi-layer coating technology has emerged; in such a method, different active materials are selected for each layer, for example, energy biased materials that can achieve high compaction are used in the layer near the current collector, and materials with good fast-charging capability are used in the layer away from the current collector, so as to achieve high energy density and maintain good fast-charging capability as well. In addition, laser grooving is also used to expand the migration path of lithium ions, thereby improving the fast-charging capability. However, electrode sheets for fast-charging batteries prepared by these new technologies are complex in structures and have high preparation cost, which is not conducive to large-scale promotion and use in production practice.

CN117410545A discloses a fast-charging and high-energy-density lithium-ion battery and an application thereof; the lithium-ion battery includes a cathode, an anode, a separator, and an electrolyte, wherein the anode includes an anode current collector and an anode slurry coating layer coated on the anode current collector; the anode slurry coating layer includes an anode active material, and the anode active material includes graphite blended with silicon oxide or graphite blended with silicon carbon, the particle size of graphite is 5-20 µm, the particle size of silicon oxide or silicon carbon is 4-15 µm, and by the total mass of the anode active material, the content of silicon oxide or silicon carbon is 0-33.3%, and the rest is graphite. However, the fast-charging performance of the fast-charging and high-energy-density lithium-ion battery is still unsatisfactory, and the rate performance of the prepared lithium-ion battery is low.

CN117810358A discloses a composite anode sheet, a preparation method therefor, and a lithium-ion battery. The composite anode sheet includes: an anode current collector; a first active material coating layer, applied to at least one surface of the anode current collector; a second active material coating layer, applied to the outer surface of the first active material coating layer; among them, the compacted density of the first active material coating layer is greater than that of the second active material coating layer. However, the composite anode sheet is complex in structure and has a high preparation cost.

### SUMMARY

### TECHNICAL PROBLEM

The fast-charging anode sheets disclosed in the related technologies have certain defects, including insufficient fast-charging performance, complex structure, and high preparation cost. Therefore, it is crucial to develop and design a new type of fast-charging anode sheet, a lithium-ion battery, and an electric device.

### TECHNICAL SOLUTION

The present application provides a fast-charging anode sheet, a lithium-ion battery, and an electric device. The anode active material in the anode material layer of the fast-charging anode sheet provided by the present application includes a silicon-based material and a carbon-based material, and the silicon-based material is the main component of the anode active material, which ensures a high gravimetric capacity and fast-charging performance of the anode material layer, and brings about a low areal density and compacted density of the anode material layer simultaneously, thus the lithium-ion battery prepared by the coordination of the fast-charging anode sheet and the cathode sheet having a high areal density, has high energy density and can achieve high-rate charging as well. In addition, the fast-charging anode sheet in the present application is simple in structure, and the raw materials are common materials, so it also has the advantages of low production cost and simple production process therefrom.

In a first aspect, the present application provides a fast-charging anode sheet, and the anode active material in the anode material layer of the fast-charging anode sheet includes a silicon-based material and a carbon-based material;
based on the mass of the anode active material as 100%, a mass fraction of the silicon-based material in the anode active material is 70wt%-99.5wt%, and a mass fraction of the carbon-based material in the anode active material is 0.5wt%-30wt%.

In a second aspect, the present application provides a lithium-ion battery, and the lithium-ion battery includes a cathode sheet and the fast-charging anode sheet as described in the first aspect;
wherein the cathode sheet has an areal density of more than or equal to 120 g/m², and a compacted density of less than or equal to 4.25 g/cm³;
a gravimetric capacity of the cathode sheet is more than or equal to 140 mAh/g;
a charging rate of the lithium-ion battery is more than or equal to 6C.

In a third aspect, the present application provides an electric device, and the electric device includes the lithium-ion battery as described in the second aspect.

### BENIFICIAL EFFECTS

Compared with the prior art, the present application has the following beneficial effects.

The anode active material in the anode material layer of the fast-charging anode sheet provided by the present application includes a silicon-based material and a carbon-based material, and the silicon-based material is the main component of the anode active material, which ensures a high gravimetric capacity and fast-charging performance of the anode material layer, and brings about a low areal density and compacted density of the anode material layer simultaneously, thus the lithium-ion battery prepared by the coordination of the fast-charging anode sheet and the cathode sheet having a high areal density, has high energy density and can achieve high-rate charging as well; in addition, the fast-charging anode sheet in the present application is simple in structure, and the raw materials are common materials, and has the advantages of low production cost and simple production process therefrom.

Other aspects will be appreciated upon reading and understanding the detailed description.

### DETAILED DESCRIPTION

In a first aspect, the present application provides a fast-charging anode sheet, and the anode active material in the anode material layer of the fast-charging anode sheet includes a silicon-based material and a carbon-based material;
based on the mass of the anode active material as 100%, a mass fraction of the silicon-based material in the anode active material is 70wt%-99.5wt%, and a mass fraction of the carbon-based material in the anode active material is 0.5wt%-30wt%.

In the present application, based on the mass of the anode active material as 100%, a mass fraction of the silicon-based material in the anode active material is 70wt%-99.5wt%, which may be, for example, 70wt%, 71wt%, 72wt%, 73wt%, 74wt%, 75wt%, 76wt%, 77wt%, 78wt%, 79wt%, 80wt%, 82wt%, 84wt%, 86wt%, 88wt%, 90wt%, 92wt%, 94wt%, 96wt%, 98wt%, 99wt%, 99.2 wt%, or 99.5 wt%, but is not limited to the listed values, and other unlisted values within the numerical range are also applicable.

In the present application, based on the mass of the anode active material as 100%, a mass fraction of the carbon-based material in the anode active material is 0.5wt%-30wt%, which may be, for example, 0.5wt%, 0.7wt%, 1wt%, 2wt%, 4wt%, 6wt%, 8wt%, 10wt%, 12wt%, 14wt%, 16wt%, 18wt%, 20wt%, 22wt%, 24wt%, 26wt%, 28wt%, or 30wt%, but is not limited to the listed values, and other unlisted values within the numerical range are also applicable.

The anode active material in the anode material layer of the fast-charging anode sheet provided by the present application includes a silicon-based material and a carbon-based material, and the silicon-based material is the main component of the anode active material, which ensures a high gravimetric capacity and fast-charging performance of the anode material layer, and brings about a low areal density and compacted density of the anode material layer simultaneously, thus the lithium-ion battery prepared by the coordination of the fast-charging anode sheet and the cathode sheet having a high areal density, has high energy density and can achieve high-rate charging as well. In addition, the fast-charging anode sheet in the present application is simple in structure, and the raw materials are common materials, so it also has the advantages of low production cost and simple production process therefrom.

Optionally, the fast-charging anode sheet has an areal density of less than or equal to 70 g/m², and a compacted density of less than or equal to 1.4 g/cm³.

In the present application, an areal density of the fast-charging anode sheet is less than or equal to 70 g/m², which may be, for example, 70 g/m², 68 g/m², 65 g/m², 62 g/m², 60 g/m², 58 g/m², 55 g/m², 52 g/m², 50 g/m², 48 g/m², 45 g/m², 42 g/m², or 40 g/m², but is not limited to the listed values, and other unlisted values within the numerical range are also applicable.

In the present application, a compacted density of the fast-charging anode sheet is less than or equal to 1.4 g/cm³, which may be, for example, 1.4 g/cm³, 1.3 g/cm³, 1.2 g/cm³, 1.1 g/cm³, 1.0 g/cm³, 0.9 g/cm³, 0.8 g/cm³, 0.7 g/cm³, 0.6 g/cm³, 0.5 g/cm³, 0.4 g/cm³, 0.3 g/cm³, or 0.2 g/cm³, but is not limited to the listed values, and other unlisted values within the numerical range are also applicable.

In the present application, a gravimetric capacity of the fast-charging anode sheet is more than or equal to 1200 mAh/g, which may be, for example, 1200 mAh/g, 1300 mAh/g, 1400 mAh/g, 1500 mAh/g, 1600 mAh/g, 1800 mAh/g, 2000 mAh/g, 2200 mAh/g, 2500mAh/g, 2800mAh/g, or 3000mAh/g, but is not limited to the listed values, and other unlisted values within the numerical range are also applicable.

Optionally, the fast-charging anode sheet further includes an anode current collector, and the anode material layer is disposed on at least one surface of the anode current collector.

Optionally, the silicon-based material includes any one or a combination of at least two of silicon nanoparticles, a silicon-carbon material, and a silicon oxide; typical but non-limiting combinations include a combination of silicon nanoparticles and a silicon-carbon material, a combination of a silicon-carbon material and a silicon oxide, or a combination of silicon nanoparticles, a silicon-carbon material, and a silicon oxide.

Optionally, a particle size D50 of the silicon-carbon material is 2-18 µm, which may be, for example, 2 µm, 4 µm, 6 µm, 8 µm, 10 µm, 12 µm, 14 µm, 16 µm, or 18 µm, but is not limited to the listed values, and other unlisted values within the numerical range are also applicable.

Optionally, a particle size D50 of the silicon oxide is 2-18 µm, which may be, for example, 2 µm, 4 µm, 6 µm, 8 µm, 10 µm, 12 µm, 14 µm, 16 µm, or 18 µm, but is not limited to the listed values, and other unlisted values within the numerical range are also applicable.

Optionally, the carbon-based material includes any one or a combination of at least two of a hard carbon, graphite, or a soft carbon; typical but non-limiting combinations include a combination of a hard carbon and graphite, a combination of graphite and a soft carbon, or a combination of a hard carbon, graphite, and a soft carbon.

Optionally, a particle size D50 of the hard carbon is 5-25 µm, which may be, for example, 5 µm, 8 µm, 10 µm, 15 µm, 20 µm, or 25 µm, but is not limited to the listed values, and other unlisted values within the numerical range are also applicable.

Optionally, a particle size D50 of graphite is 5-25 µm, which may be, for example, 5 µm, 8 µm, 10 µm, 15 µm, 20 µm, or 25 µm, but is not limited to the listed values, and other unlisted values within the numerical range are also applicable.

Optionally, the anode material layer further includes a conductive agent and a binder.

Optionally, based on the mass of the anode material layer as 100%, a mass fraction of the anode active material in the anode material layer is 90wt%-98wt%, a mass fraction of the conductive agent in the anode material layer is 0.02wt%-8wt%, and the rest is the binder.

In the present application, based on the mass of the anode material layer as 100%, a mass fraction of the anode active material in the anode material layer is 90wt%-98wt%, which may be, for example, 90wt%, 91wt%, 92wt%, 93wt%, 94wt%, 95wt%, 96wt%, 97wt%, or 98wt%, but is not limited to the listed values, and other unlisted values within the numerical range are also applicable.

In the present application, based on the mass of the anode material layer as 100%, a mass fraction of the conductive agent in the anode material layer is 0.02wt%-8wt%, which may be, for example, 0.02wt%, 0.05wt%, 0.08wt%, 0.1wt%, 0.5wt%, 1wt%, 2wt%, 3wt%, 4wt%, 5wt%, 6wt%, 7wt%, or 8wt%, but is not limited to the listed values, and other unlisted values within the numerical range are also applicable.

Optionally, the conductive agent includes a first conductive agent and a second conductive agent.

The first conductive agent includes any one or a combination of at least two of conductive carbon black, acetylene black, Ketjen black, conductive graphite, or graphene; typical but non-limiting combinations include a combination of conductive carbon black and acetylene black, a combination of acetylene black and Ketjen black, a combination of conductive graphite and graphene, or a combination of conductive carbon black, acetylene black, and Ketjen black.

The second conductive agent includes carbon fiber and/or carbon nanotubes.

Optionally, an average particle size of conductive carbon black is 10 nm-100 nm, which may be, for example, 10 nm, 20 nm, 30 nm, 40 nm, 50 nm, 60 nm, 70 nm, 80 nm, 90 nm, or 100 nm, but is not limited to the listed values, and other unlisted values within the numerical range are also applicable.

Optionally, an average particle size of acetylene black is 10 nm-100 nm, which may be, for example, 10 nm, 20 nm, 30 nm, 40 nm, 50 nm, 60 nm, 70 nm, 80 nm, 90 nm, or 100 nm, but is not limited to the listed values, and other unlisted values within the numerical range are also applicable.

Optionally, an average particle size of Ketjen black is 10 nm-100 nm, which may be, for example, 10 nm, 20 nm, 30 nm, 40 nm, 50 nm, 60 nm, 70 nm, 80 nm, 90 nm, or 100 nm, but is not limited to the listed values, and other unlisted values within the numerical range are also applicable.

Optionally, an average particle size of conductive graphite is 2 µm-15 µm, which may be, for example, 2 µm, 4 µm, 6 µm, 8 µm, 10 µm, 12 µm, 14 µm, or 15 µm, but is not limited to the listed values, and other unlisted values within the numerical range are also applicable.

Optionally, an average sheet size of graphene is 2 µm-15 µm, which may be, for example, 2 µm, 4 µm, 6 µm, 8 µm, 10 µm, 12 µm, 14 µm, or 15 µm, but is not limited to the listed values, and other unlisted values within the numerical range are also applicable.

Optionally, an aspect ratio of carbon fiber is 40-100, which may be, for example, 40, 45, 50, 55, 60, 65, 70, 75, 80, 85, 90, 95, or 100, but is not limited to the listed values, and other unlisted values within the numerical range are also applicable.

Optionally, an aspect ratio of carbon nanotubes is 500-10000, which may be, for example, 500, 1000, 1500, 2000, 2500, 3000, 3500, 4000, 4500, 5000, 5500, 6000, 6500, 7000, 7500, 8000, 8500, 9000, 9500, or 10000, but is not limited to the listed values, and other unlisted values within the numerical range are also applicable.

Optionally, the binder includes any one or a combination of at least two of polyvinylidene fluoride, polyimide, polyacrylonitrile, styrene butadiene rubber, carboxymethyl cellulose, or polyacrylic acid; typical but non-limiting combinations include a combination of polyvinylidene fluoride and polyimide, a combination of polyimide and polyacrylonitrile, a combination of styrene butadiene rubber and carboxymethyl cellulose, a combination of carboxymethyl cellulose and polyacrylic acid, or a combination of polyvinylidene fluoride, polyimide, and polyacrylonitrile.

Optionally, a molecular mass of polyvinylidene fluoride is 500,000-2,000,000, which may be, for example, 500,000, 800,000, 1,000,000, 1,200,000, 1,400,000, 1,600,000, 1,800,000, or 2,000,000, but is not limited to the listed values, and other unlisted values within the numerical range are also applicable.

Optionally, a molecular mass of polyimide is 100,000-1,000,000, which may be, for example, 100,000, 200,000, 300,000, 400,000, 500,000, 600,000, 700,000, 800,000, 900,000, or 1,000,000, but is not limited to the listed values, and other unlisted values within the numerical range are also applicable.

Optionally, a molecular mass of polyacrylonitrile is 100,000-1,000,000, which may be, for example, 100,000, 200,000, 300,000, 400,000, 500,000, 600,000, 700,000, 800,000, 900,000, or 1,000,000, but is not limited to the listed values, and other unlisted values within the numerical range are also applicable.

Optionally, a molecular mass of styrene butadiene rubber is 100,000-800,000, which may be, for example, 100,000, 200,000, 300,000, 400,000, 500,000, 600,000, 700,000, or 800,000, but is not limited to the listed values, and other unlisted values within the numerical range are also applicable.

Optionally, a molecular mass of carboxymethyl cellulose is 100,000-1,000,000, which may be, for example, 100,000, 200,000, 300,000, 400,000, 500,000, 600,000, 700,000, 800,000, 900,000, or 1,000,000, but is not limited to the listed values, and other unlisted values within the numerical range are also applicable.

Optionally, a molecular mass of polyacrylic acid is 100,000-1,000,000, which may be, for example, 100,000, 200,000, 300,000, 400,000, 500,000, 600,000, 700,000, 800,000, 900,000, or 1,000,000, but is not limited to the listed values, and other unlisted values within the numerical range are also applicable.

In a second aspect, the present application provides a lithium-ion battery, and the lithium-ion battery includes a cathode sheet and the fast-charging anode sheet as described in the first aspect;
the cathode sheet has an areal density of more than or equal to 120 g/m², and a compacted density of less than or equal to 4.25 g/cm³;
a gravimetric capacity of the cathode sheet is more than or equal to 140 mAh/g;
a charging rate of the lithium-ion battery is more than or equal to 6C.

In the present application, an areal density of the cathode sheet is more than or equal to 120 g/m², which may be, for example, 120 g/m², 130 g/m², 140 g/m², 150 g/m², 160 g/m², 170 g/m², 180 g/m², 190 g/m², or 200 g/m², but is not limited to the listed values, and other unlisted values within the numerical range are also applicable.

In the present application, a compacted density of the cathode sheet is less than or equal to 4.25 g/cm³, which may be, for example, 4.25 g/cm³, 4.2 g/cm³, 4.15 g/cm³, 4.1 g/cm³, 4.05 g/cm³, 4.00 g/cm³, 2.95 g/cm³, 3.9 g/cm³, or 3.8 g/cm³, but is not limited to the listed values, and other unlisted values within the numerical range are also applicable.

In the present application, a gravimetric capacity of the cathode sheet is more than or equal to 140 mAh/g, which may be, for example, 140 mAh/g, 150 mAh/g, 160 mAh/g, 180 mAh/g, 200 mAh/g, 220 mAh/g, 240 mAh/g, or 260 mAh/g, but is not limited to the listed values, and other unlisted values within the numerical range are also applicable.

In the present application, a charging rate of the lithium-ion battery is more than or equal to 6C, which may be, for example, 6C, 6.1C, 6.2C, 6.3C, 6.4C, 6.5C, 6.8C, 7C, 7.5C, 8C, 8.5C, or 9C, but is not limited to the listed values, and other unlisted values within the numerical range are also applicable.

In a third aspect, the present application provides an electric device, and the electric device includes the lithium-ion battery as described in the second aspect.

The numerical range in the present application includes not only the point values listed above, but also any point values between the above numerical ranges that are not listed, and for the sake of space and brevity, the present application does not exhaustively list the specific point values included in the ranges.

The technical solutions of the present application are further described below in terms of specific embodiments. It should be clear to those skilled in the art that the embodiments are merely used for a better understanding of the present application and should not be regarded as a specific limitation to the present application.

### Example 1

This example provides a fast-charging anode sheet, and the fast-charging anode sheet had an areal density of 45 g/m², a compacted density of 1.4 g/cm³, and a gravimetric capacity of 1200 mAh/g;
the fast-charging anode sheet further included an anode current collector and an anode material layer coated on surfaces of two sides of the anode current collector, and the anode material layer included an anode active material, a conductive agent, and a binder; based on the mass of the anode material layer as 100%, a mass fraction of the anode active material in the anode material layer was 92wt%, a mass fraction of the conductive agent was 4wt%, and the rest was the binder;
the anode active material included a silicon-based material (silicon-carbon material with a particle size D50 of 10 µm) and a carbon-based material (a hard carbon with a particle size D50 of 15 µm); based on the mass of the anode active material as 100%, a mass fraction of the silicon-based material in the anode active material was 85wt%, and a mass fraction of the carbon-based material was 15wt%;
the conductive agent included a first conductive agent (conductive carbon black with an average particle size of 50 nm) and a second conductive agent (carbon fiber with an aspect ratio of 70);
the binder included polyvinylidene fluoride with a molecular mass of 1,200,000.

This example further provides a lithium-ion battery, and the lithium-ion battery included a cathode sheet and the fast-charging anode sheet provided by this example;
the cathode sheet had an areal density of 210 g/m², a compacted density of 3.4 g/cm³, and a gravimetric capacity of 210 mAh/g;
a charging rate of the lithium-ion battery was more than or equal to 6C.

### Example 2

This example provides a fast-charging anode sheet, and the fast-charging anode sheet had an areal density of 35 g/m², a compacted density of 1.4 g/cm³, and a gravimetric capacity of 1200 mAh/g;
the fast-charging anode sheet further included an anode current collector and an anode material layer coated on surfaces of two sides of the anode current collector, and the anode material layer included an anode active material, a conductive agent, and a binder; based on the mass of the anode material layer as 100%, a mass fraction of the anode active material in the anode material layer was 92wt%, a mass fraction of the conductive agent was 4wt%, and the rest was the binder;
the anode active material included a silicon-based material (silicon oxide with a particle size D50 of 2 µm) and a carbon-based material (graphite with a particle size D50 of 25 µm); based on the mass of the anode active material as 100%, a mass fraction of the silicon-based material in the anode active material was 70wt%, and a mass fraction of the carbon-based material was 30wt%;
the conductive agent included a first conductive agent (acetylene black with an average particle size of 100 nm) and a second conductive agent (carbon nanotubes with an aspect ratio of 500);
the binder included polyimide with a molecular mass of 100,000.

This example further provides a lithium-ion battery, and the lithium-ion battery included a cathode sheet and the fast-charging anode sheet provided by this example;
the cathode sheet had an areal density of 160 g/m², a compacted density of 3.4 g/cm³, and a gravimetric capacity of 210 mAh/g;
a charging rate of the lithium-ion battery was more than or equal to 6C.

### Example 3

This example provides a fast-charging anode sheet, and the fast-charging anode sheet had an areal density of 70 g/m², a compacted density of 1.4 g/cm³, and a gravimetric capacity of 1200 mAh/g;
the fast-charging anode sheet further included an anode current collector and an anode material layer coated on surfaces of two sides of the anode current collector, and the anode material layer included an anode active material, a conductive agent, and a binder; based on the mass of the anode material layer as 100%, a mass fraction of the anode active material in the anode material layer was 98wt%, a mass fraction of the conductive agent was 0.02wt%, and the rest was the binder;
the anode active material included a silicon-based material (silicon-carbon material with a particle size D50 of 18 µm) and a carbon-based material (graphite with a particle size D50 of 5 µm); based on the mass of the anode active material as 100%, a mass fraction of the silicon-based material in the anode active material was 99.5wt%, and a mass fraction of the carbon-based material was 0.5wt%;
the conductive agent included a first conductive agent (Ketjen black with an average particle size of 10 nm) and a second conductive agent (carbon nanotubes with an aspect ratio of 10000);
the binder included polyacrylonitrile with a molecular mass of 1,000,000.

This example further provides a lithium-ion battery, and the lithium-ion battery included a cathode sheet and the fast-charging anode sheet provided by this example;
the cathode sheet had an areal density of 345 g/m², a compacted density of 3.4 g/cm³, and a gravimetric capacity of 210 mAh/g;
a charging rate of the lithium-ion battery was more than or equal to 6C.

### Example 4

This example provides a fast-charging anode sheet, except that the areal density of the fast-charging anode sheet was 100 g/m², the compacted density was 1.4 g/cm³, and the gravimetric capacity was 1200 mAh/g, the rest were the same as those in Example 1.

This example further provides a lithium-ion battery, except that the anode sheet of the lithium-ion battery was the fast-charging anode sheet provided by this example, the rest were the same as those in Example 1.

### Example 5

This example provides a fast-charging anode sheet, except that the particle size of the silicon-carbon material was 1 µm, the rest were the same as those in Example 1.

This example further provides a lithium-ion battery, except that the anode sheet of the lithium-ion battery was the fast-charging anode sheet provided by this example, the rest were the same as those in Example 1.

### Example 6

This example provides a fast-charging anode sheet, except that the particle size of the silicon-carbon material was 25 µm, the rest were the same as those in Example 1.

This example further provides a lithium-ion battery, except that the anode sheet of the lithium-ion battery was the fast-charging anode sheet provided by this example, the rest were the same as those in Example 1.

### Example 7

This example provides a fast-charging anode sheet, except that the particle size of the hard carbon was 4 µm, the rest were the same as those in Example 1.

This example further provides a lithium-ion battery, except that the anode sheet of the lithium-ion battery was the fast-charging anode sheet provided by this example, the rest were the same as those in Example 1.

### Example 8

This example provides a fast-charging anode sheet, except that the particle size of the hard carbon was 35 µm, the rest were the same as those in Example 1.

This example further provides a lithium-ion battery, except that the anode sheet of the lithium-ion battery was the fast-charging anode sheet provided by this example, the rest were the same as those in Example 1.

### Example 9

This example provides a fast-charging anode sheet, except that the first conductive agent (conductive carbon black with an average particle size of 50 nm) was replaced with an equivalent mass of the second conductive agent (carbon fiber with an aspect ratio of 70), the rest were the same as those in Example 1.

This example further provides a lithium-ion battery, except that the anode sheet of the lithium-ion battery was the fast-charging anode sheet provided by this example, the rest were the same as those in Example 1.

### Example 10

This example provides a fast-charging anode sheet, except that the second conductive agent (carbon fiber with an aspect ratio of 70) was replaced with an equivalent mass of the first conductive agent (conductive carbon black with an average particle size of 50 nm), the rest were the same as those in Example 1.

This example further provides a lithium-ion battery, except that the anode sheet of the lithium-ion battery was the fast-charging anode sheet provided by this example, the rest were the same as those in Example 1.

### Example 11

This example provides a fast-charging anode sheet, which was the same as that in Example 1.

This example further provides a lithium-ion battery, except that the areal density of the cathode sheet of the lithium-ion battery was 100 g/m², the compacted density was 3.4 g/cm³, and the gravimetric capacity was more than or equal to 1200 mAh/g, the rest were the same as those in Example 1.

### Comparative Example 1

This comparative example provides a fast-charging anode sheet, except that based on the mass of the anode active material as 100%, the mass fraction of the silicon-based material in the anode active material was 60wt%, and the mass fraction of the carbon-based material was 40wt%, the rest were the same as those in Example 1.

This example further provides a lithium-ion battery, except that the anode sheet of the lithium-ion battery was the fast-charging anode sheet provided by this example, the rest were the same as those in Example 1.

The lithium-ion batteries provided by the above Examples and Comparative Examples were subjected to test on energy density, and the test method was as follows: the full battery energy density of lithium-ion battery = discharging energy of the battery / battery weight; the test method of the discharging energy: charging to 4.35 V at a constant current and constant voltage of 0.2C, and then discharging to 2.5 V at 0.2C, and cycling for 3 cycles to obtain the discharging energy, and the calculated full battery energy density is shown in Table 1;
the lithium-ion batteries provided by the above Examples and Comparative Examples were subjected to test on rate performance, and the test method was as follows: performing a charging-discharging test on the obtained battery by using a battery test system, and the test voltage range was 2.5-4.35 V; the rate performance of the lithium-ion batteries at 10C obtained from the test is shown in Table 1.

**Table 1**

| | Full battery energy density (Wh/kg) | Constant current charge ratio (%) |
|---|---|---|
| Example 1 | 300 | 75 |
| Example 2 | 280 | 80 |
| Example 3 | 340 | 72 |
| Example 4 | 138 | 30 |
| Example 5 | 200 | 75 |
| Example 6 | 270 | 40 |
| Example 7 | 210 | 73 |
| Example 8 | 290 | 52 |
| Example 9 | 282 | 40 |
| Example 10 | 290 | 42 |
| Example 11 | 195 | 73 |
| Comparative Example 1 | 200 | 72 |

As can be seen from Table 1:
(1) the lithium-ion batteries provided by Examples 1-3 have high rate performance as well as high energy density;
(2) from the comparison of Example 1 and Example 4, it can be seen that in the present application, the areal density of the fast-charging anode sheet will affect the performance of the lithium-ion battery; if the areal density of the fast-charging anode sheet is less than or equal to 70 g/m², the lithium-ion battery shows better performance, which is due to the smaller the areal density of the electrode sheet, the thinner the coating, and the better consistency of the lithium-ion concentration in the thickness direction, thereby reducing the transmission impedance, and improving the performance of the lithium-ion battery when cooperating with the cathode sheet with a large areal density;
(3) from the comparison of Example 1 and Examples 5 and 6, it can be seen that in the present application, the particle size of the silicon-based material will affect the performance of the lithium-ion battery; if the particle size of the silicon-based material is overly low or overly high, the performance of the lithium-ion battery will be deteriorated, which is because a low particle size will lead to insufficient processing performance of the silicon-based material and increased side reactions, resulting in deterioration of the performance of the fast-charging anode sheet and the lithium-ion battery, and a high particle size will lead to the reduction of the kinetic properties of the silicon-based material, resulting in deterioration of the performance of the fast-charging anode sheet and the lithium-ion battery;
(4) from the comparison of Example 1 and Examples 7 and 8, it can be seen that in the present application, the particle size of the carbon-based material will affect the performance of the lithium-ion battery; if the particle size of carbon-based materials is overly low or overly high, the performance of the lithium-ion battery will be deteriorated, which is because a low particle size will lead to insufficient processing performance of the carbon-based material and increased side reactions, resulting in deterioration of the performance of the fast-charging anode sheet and the lithium-ion battery, and a high particle size will lead to the reduction of the kinetic properties of the carbon-based material, resulting in deterioration of the performance of the fast-charging anode sheet and the lithium-ion battery;
(5) from the comparison of Example 1 and Examples 9 and 10, it can be seen that in the present application, two different types of conductive agents included in the conductive agent is beneficial to the improvement of the performance of the lithium-ion battery, which is because in a case where the conductive agent includes two different types of conductive agents, the integrity of the conductive network can be improved, and point, line, and surface contact are formed between the active particles, thus reducing the failure of the conductive network caused by the expansion of the silicon-based material;
(6) from the comparison of Example 1 and Example 11, it can be seen that if the areal density of the cathode sheet is more than or equal to 120 g/m², the lithium-ion battery shows a more excellent energy density, which is because the cathode with a high areal density can coordinate with the fast-charging anode sheet with a high rate performance to improve the overall energy density of the battery, so that the battery has a high energy density as well as an excellent rate performance; and
(7) from the comparison of Example 1 and Comparative Example 1, it can be seen that the anode active material in the anode material layer of the fast-charging anode sheet provided by the present application includes a silicon-based material and a carbon-based material, and the silicon-based material is the main component of the anode active material, which ensures a high gravimetric capacity and fast-charging performance of the anode material layer, and brings about a low areal density and compacted density of the anode material layer simultaneously, thus the lithium-ion battery prepared by the coordination of the fast-charging anode sheet and the cathode sheet having a high areal density, has high energy density and can achieve high-rate charging as well; in addition, the fast-charging anode sheet in the present application is simple in structure, and the raw materials are common materials, and has the advantages of low production cost and simple production process therefrom.

## Claims

1. A fast-charging anode sheet, wherein an anode active material in an anode material layer of the fast-charging anode sheet comprises a silicon-based material and a carbon-based material;
based on the mass of the anode active material as 100%, a mass fraction of the silicon-based material in the anode active material is 70wt%-99.5wt%, and a mass fraction of the carbon-based material in the anode active material is 0.5wt%-30wt%.

2. The fast-charging anode sheet according to claim 1, wherein the fast-charging anode sheet has an areal density of less than or equal to 70 g/m², and a compacted density of less than or equal to 1.4 g/cm³.

3. The fast-charging anode sheet according to claim 1 or 2, wherein a gravimetric capacity of the fast-charging anode sheet is more than or equal to 1200 mAh/g.

4. The fast-charging anode sheet according to any one of claims 1-3, wherein the silicon-based material comprises any one or a combination of at least two of silicon nanoparticles, a silicon-carbon material, and a silicon oxide.

5. The fast-charging anode sheet according to any one of claims 1-4, wherein a particle size D50 of the silicon-carbon material is 2-18 µm;
optionally, a particle size D50 of the silicon oxide is 2-18 µm.

6. The fast-charging anode sheet according to any one of claims 1-5, wherein the carbon-based material comprises any one or a combination of at least two of a hard carbon, graphite, or a soft carbon.

7. The fast-charging anode sheet according to claim 6, wherein a particle size D50 of the hard carbon is 5-25 µm;
optionally, a particle size D50 of graphite is 5-25 µm.

8. The fast-charging anode sheet according to any one of claims 1-7, wherein the anode material layer further comprises a conductive agent and a binder;
optionally, based on the mass of the anode material layer as 100%, a mass fraction of the anode active material in the anode material layer is 90wt%-98wt%, a mass fraction of the conductive agent is 0.02wt%-8wt%, and the rest is the binder.

9. The fast-charging anode sheet according to claim 8, wherein the conductive agent comprises a first conductive agent and a second conductive agent;
the first conductive agent comprises any one or a combination of at least two of conductive carbon black, acetylene black, Ketjen black, conductive graphite, or graphene;
the second conductive agent comprises carbon fiber and/or carbon nanotubes.

10. The fast-charging anode sheet according to claim 9, wherein an average particle size of conductive carbon black is 10 nm-100 nm;
optionally, an average particle size of acetylene black is 10 nm-100 nm;
optionally, an average particle size of Ketjen black is 10 nm-100 nm;
optionally, an average particle size of conductive graphite is 2 µm-15 µm;
optionally, an average sheet size of graphene is 2 µm-15 µm;
optionally, an aspect ratio of carbon fiber is 40-100;
optionally, an aspect ratio of carbon nanotubes is 500-10000.

11. The fast-charging anode sheet according to any one of claims 8-10, wherein the binder comprises any one or a combination of at least two of polyvinylidene fluoride, polyimide, polyacrylonitrile, styrene butadiene rubber, carboxymethyl cellulose, or polyacrylic acid.

12. The fast-charging anode sheet according to claim 11, wherein a molecular mass of polyvinylidene fluoride is 500,000-2,000,000;
optionally, a molecular mass of polyimide is 100,000-1,000,000;
optionally, a molecular mass of polyacrylonitrile is 100,000-1,000,000;
optionally, a molecular mass of styrene butadiene rubber is 100,000-800,000;
optionally, a molecular mass of carboxymethyl cellulose is 100,000-1,000,000;
optionally, a molecular mass of polyacrylic acid is 100,000-1,000,000.

13. A lithium-ion battery, which comprises a cathode sheet and the fast-charging anode sheet according to any one of claims 1-12;
the cathode sheet has an areal density of more than or equal to 120 g/m², and a compacted density of less than or equal to 4.25 g/cm³;
a gravimetric capacity of the cathode sheet is more than or equal to 140 mAh/g;
a charging rate of the lithium-ion battery is more than or equal to 6C.

14. An electric device, comprising the lithium-ion battery according to claim 13.
